# FASCICULE DE BREVET EUROPEEN

(11) **EP 3 077 188 B1**
(45) Date de publication et mention de la délivrance du brevet: **02.01.2019**
(21) Numéro de dépôt: 14815009.7
(22) Date de dépôt: 28.11.2014
(51) Int. Cl.: B29D 30/06, B29C 33/38, B29L 30/00, B29L 31/00, B29C 33/30, B29K 83/00

(54) **PROCÉDÉ DE FABRICATION D'UN ÉLÉMENT MOULANT D'UN MOULE POUR LA VULCANISATION D'UN PNEUMATIQUE**
VERFAHREN ZUR HERSTELLUNG EINES FORMTEILS FÜR EINE REIFENVULKANISIERFORM
PROCESS OF FABRICATING A MOULDING ELEMENT OF A MOULD FOR VULCANIZING TIRES

(30) Priorité: 06.12.2013 FR 1302849
(43) Date de publication de la demande: 12.10.2016
(73) Titulaire: Compagnie Générale des Etablissements Michelin, 63000 Clermont-Ferrand (FR)
(72) Inventeur: LEPRETRE, Jérôme, F-63040 Clermont-Ferrand Cedex 9 (FR); ANDANSON, Patrick, F-63040 Clermont-Ferrand Cedex 9 (FR); SEGOVIANO, Enrique, F-63040 Clermont-Ferrand Cedex 9 (FR)
(74) Mandataire: Demaure, Pierre-Yves
(86) Numéro de dépôt international: PCT/IB2014/002589
(87) Numéro de publication internationale: WO 2015/082968

(56) Documents cités:
- WO-A1-99/48674
- US-A1- 2002 176 792
- US-A1- 2005 248 053
- US-A1- 2011 042 858
- US-A1- 2012 043 693

## Description

### DOMAINE TECHNIQUE DE L'INVENTION

L'invention concerne un procédé de fabrication d'éléments moulants pour moules destinés au moulage de pneumatiques pourvus d'une bande de roulement comportant un agencement circonférentiel de motifs de sculpture.

### ETAT DE LA TECHNIQUE ANTERIEURE

La fabrication des pneumatiques en grandes séries fait appel à un processus industriel particulièrement complexe et coûteux, impliquant de nombreuses machines, des procédés complexes et de multiples phases préparatoires. La complexité du processus a pour corollaire une grande rigidité, réduisant les possibilités de modifications de configuration ou d'agencement après la mise en place d'une ligne de fabrication. Cette rigidité s'applique particulièrement aux moules prévus pour les phases de vulcanisation et moulage.

Or, de plus en plus de véhicules sont produits à des séries limitées, avec des particularités rendant ces véhicules uniques et attrayants par rapport à ceux fabriqués en plus grande série. Parmi les spécificités offertes, les pneumatiques constituent souvent un des points forts de démarcation.

Il existe donc un besoin important et croissant pour améliorer la souplesse des processus de fabrication des pneumatiques. En outre, il existe un besoin croissant pour simplifier et faciliter la préparation de pneumatiques pourvus de spécificités attrayantes.

Par ailleurs, le document WO9948674 décrit un modèle de fonderie pour la fabrication d'un segment destiné à être monté dans un moule en forme d'anneau. Le modèle de fonderie comprend au moins une surface à motif qui est de préférence équipée de parties de motifs. La surface de motifs du modèle est agencée pour être formée à l'aide d'au moins deux éléments de modèles. Le document décrit également un procédé de fabrication d'un modèle de fonderie.

Le document US2012/043693 concerne des procédés de moulage afin de fabriquer des objets microstructurés. En incluant une pluralité de microcaractéristiques sur la surface d'un objet, d'autres caractéristiques telles que l'augmentation de l'hydrophobicité peuvent être conférées à l'objet. Certains procédés de moulage et de fonderie décrits dans ce document permettent la fabrication d'objets ayant à la fois des micro et macro caractéristiques.

La demande US2011/042858 décrit un procédé de fabrication de moule ayant une surface préparée pour la production. L'un des procédés décrit dans ce document concerne la création d'un modèle à géométrie élargie d'un moule, par informatique. Un modèle physique du moule est ainsi produit sur la base du modèle informatique au moyen d'un matériau qui se désintègre à une certaine température. Un moulage céramique du modèle physique du moule est créé et un métal fondu est versé et coulé dans le moulage céramique, tout en désintégrant le modèle physique du moule. Le métal fondu est ensuite refroidi et le moule céramique est retiré afin de révéler le moule à dont la surface est préparée pour la production.

Le document US2005/0248053 décrit un moule comportant une pluralité de modules disposés côte à côte. Une cale dont l'épaisseur est spécifiquement contrôlée permet de disposer une fente entre chacun des modules.

Le document US2002/0176792 concerne un procédé de fabrication d'un segment de moule de pneumatique. Un modèle de pneumatique segmenté en matériau réfractaire est formé par des segments du modèle de pneumatique. Les segments sont obtenus par frittage. Des lames peuvent être montées dans les segments du modèle de pneumatique.

Aucun des documents précités ne présente de solution permettant d'augmenter la souplesse des modes de fabrication de façon suffisante pour satisfaire les nouvelles exigences en matière de gammes de produits de plus en plus sujettes à des évolutions rapides.

### EXPOSE DE L'INVENTION

Un objet de l'invention consiste à prévoir un procédé de fabrication permettant de faciliter la modification des caractéristiques visuelles des pneumatiques.

Un autre objet de l'invention consiste à prévoir un procédé de fabrication permettant de réduire les pertes de matières premières lors des modifications des caractéristiques visuelles des pneumatiques.

Encore un autre objet consiste à prévoir un procédé permettant d'optimiser la fabrication des pneumatiques, en particulier au niveau de la phase de préparation des moules.

Pour ce faire, l'invention prévoit un procédé de fabrication d'éléments moulants pour moules destinés au moulage de pneumatiques selon la revendication 1. Le procédé comporte :
a) une étape consistant à aligner une pluralité de garnitures de base en matériau souple pour former une portion de base de circonférence de bande de roulement ;
b) une étape consistant à générer, à partir de la portion de base de circonférence de bande de roulement, un support intermédiaire, correspondant à la portion de circonférence de bande de roulement ;
c) une étape d'obtention d'un élément moulant brut à partir du support intermédiaire ;
chacune des garnitures de base correspondant à un motif de l'agencement circonférentiel de la bande de roulement du pneumatique à mouler.

Ce procédé permet une grande souplesse dans la configuration des moules. Du fait que chaque garniture de base correspond à un motif de la bande de roulement du pneumatique à mouler, les éléments moulants résultants bénéficient de cette même caractéristique. En utilisant des éléments moulants avec des motifs différents, on peut adapter ou modifier l'architecture de la bande de roulement sans devoir remplacer tout le moule. En fonction des besoins de types de moules et des quantités requises pour chaque type d'éléments moulants, les quantités produites pour chaque type sont facilement ajustables puisque le moule intermédiaire permet de loger les garnitures de base selon les besoins de production de ces différents types d'éléments moulants, en favorisant par exemple un type plutôt qu'un autre

La fabrication simultanée d'une pluralité d'éléments moulants permet d'optimiser le processus de fabrication, avec une simplification de l'outillage et une réduction des pertes de matière.

Selon un mode de réalisation avantageux, le support intermédiaire étant réalisé dans un moule intermédiaire.

Le moule intermédiaire permet de regrouper les garnitures de base de façon simple, rapide, avec un positionnement précis. L'étape de moulage du support intermédiaire est de ce fait optimisée, avec une optimisation de l'espace global et une précision de réalisation particulièrement avantageuse.

Selon un mode de réalisation avantageux, les parties souples s'étendent les unes à la suite des autres dans le moule intermédiaire.

Cette disposition permet de limiter les espaces libres ou non productifs entre les motifs.

Dans une variante avantageuse, les parties souples dans le moule intermédiaire sont calées à l'aide d'une cale, cette cale présentant une dureté plus élevée que celle du matériau souple, permettant ainsi de transmettre les efforts de compression sans dégrader les garnitures de base.

La cale facilite la mise en place et confère une excellente précision de positionnement.

Selon l'invention, le procédé comporte par ailleurs une étape consistant à découper l'élément brut pour former une pluralité de secteurs ou élément découpés, ces derniers étant aptes à être assemblés selon un ordre prédéterminé pour former un secteur du moule.

Une seule phase de moulage permet donc l'obtention de plusieurs secteurs ou éléments moulants.

Selon une autre variante de réalisation, les éléments découpés comportent au moins une surépaisseur de matière et sont usinés pour mise en forme finale des dimensions avant assemblage dans le moule.

Cette étape permet d'optimiser la précision des éléments moulants.

Selon une autre variante de réalisation, le support intermédiaire est réalisé en matériau destructible.

Selon encore une autre variante de réalisation, l'élément moulant brut est réalisé en matériau réutilisable.

Selon encore un mode de réalisation avantageux, le procédé comporte une étape préalable de réalisation d'une matrice de base (ou gabarit) permettant l'obtention de garnitures de base correspondantes.

Dans une autre variante, la garniture de base est constituée de silicone, et de préférence de silastène. On obtient ainsi la possibilité de réutiliser la garniture de base pour d'autres productions.

Selon diverses variantes de réalisation, l'étape (a) d'alignement des garnitures de base peut être effectuée sur un support plat ou concave.

Le procédé s'adapte ainsi aux différents types de moules.

L'invention prévoit également un moule comportant un support sur lequel une pluralité d'éléments moulants obtenus par le procédé préalablement décrit sont alignées circonférentiellement.

L'invention prévoit aussi un pneumatique obtenu par moulage et vulcanisation à l'aide d'un moule comportant une pluralité de garnitures/secteurs circonférentiels obtenus par le procédé de fabrication préalablement décrit.

Dans une variante avantageuse, le pneumatique comporte une bande de roulement pourvue d'une pluralité de motifs disposés en alternance circonférentielle, chacun des motifs de l'agencement circonférentiel correspondant à un motif d'une garniture de base utilisée dans le procédé de fabrication décrit ci-dessus.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1 représente schématiquement les principaux éléments permettant de réaliser un support intermédiaire à partir d'un alignement de garnitures de base ;
- la figure 2 est une représentation schématique en perspective d'un exemple de garniture de base ;
- la figure 3 illustre une représentation schématique en perspective d'un exemple d'élément de moulage semi-fini ;
- la figure 4 illustre une représentation schématique en perspective d'un exemple de secteur 6 après découpage ;
- la figure 5 illustre une représentation schématique en perspective d'un exemple de secteur 6 après usinage ;
- la figure 6 est une représentation schématique en perspective d'un exemple de matrice de base.

Dans la description qui va suivre, des éléments sensiblement identiques ou similaires seront désignés par des références identiques.

### DESCRIPTION DETAILLE DE L'INVENTION

### DEFINITIONS

Par « pneumatique », on entend tous les types de bandages élastiques soumis à une pression interne ou non.

Par «bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « matériau destructible », on entend un matériau facile à enlever après moulage de l'élément prévu, par destruction, comme par exemple en le cassant ou en le découpant.

Par « matériau réutilisable » on entend un matériau dont les caractéristiques mécaniques permettent la réutilisation à plusieurs reprises dans un procédé de moulage industriel de pneumatiques.

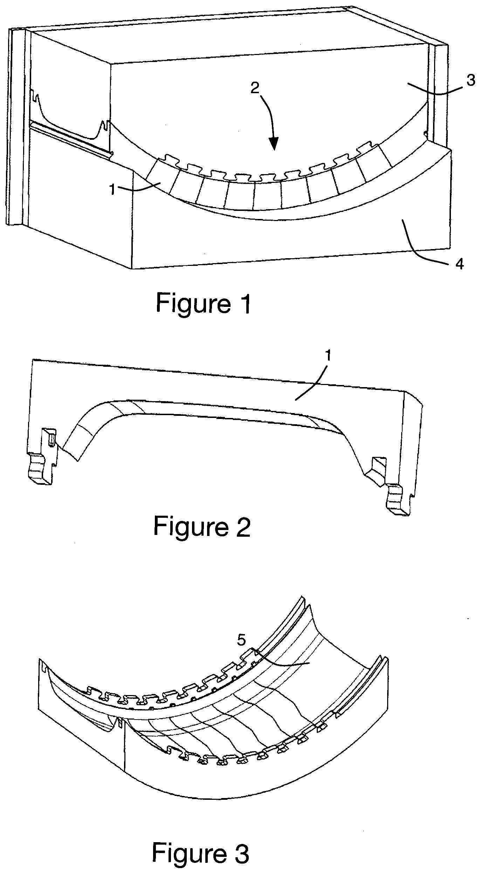

La figure 2 illustre un exemple de garniture de base 1 réalisée en matériau souple comme par exemple en silicone, et de préférence en silastène. La garniture a un profil sensiblement allongé, avec, à chacune de ses extrémités, un membre de fixation de préférence en forme de queue d'aronde.

Tel que montré à la figure 1, une pluralité de garnitures de base 1 sont alignées transversalement les unes contre les autres de façon à former une portion de base de circonférence de base de roulement 2. Pour maintenir les garnitures de base bien assemblées les unes contre les autres, un ou plusieurs appuis tels que des cales, en matériau de dureté plus élevée que celui des garnitures, sont prévues, par exemple de chaque côté des garnitures disposées aux extrémités latérales.

Un moule intermédiaire 4, en forme de berceau, sert de support pour les garnitures. L'ensemble résultant permet de mouler un support intermédiaire 3, correspondant à la portion de circonférence de bande de roulement. Ce support intermédiaire 3 est avantageusement réalisé en matériau destructible tel que du plâtre.

La figure 3 illustre le résultat de l'étape suivante, consistant à réaliser un élément moulant brut 5 pour moule de pneumatique. Un support intermédiaire 3 est utilisé à cet effet pour réaliser un élément moulant brut par moulage. Après ce moulage, le support intermédiaire 3 utilisé est détruit afin de libérer la pièce nouvellement moulée. S'agissant d'un élément sujet à être utilisé à de nombreuses reprises dans des phases de production, l'élément brut est réalisé en « matériau réutilisable » en alliage métallique léger tel qu'en aluminium. Ce matériau présente également l'avantage d'être usinable.

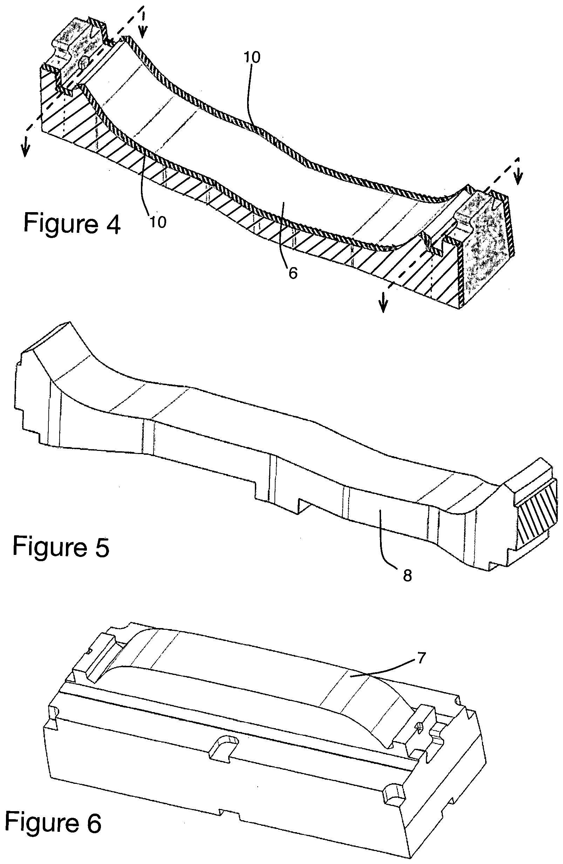

La figure 4 montre le résultat de l'étape subséquente consistant à découper l'élément de moulage semi-fini en une pluralité de secteurs 6 ou éléments moulants découpés. La découpe est avantageusement effectuée à l'aide d'une découpeuse à jet d'eau à très haute pression. Pour effectuer cette découpe, on prévoit dans la conception des pièces une surépaisseur 10 de matière sur les faces de la garniture. Cette surépaisseur 10 est éliminée lors de la découpe au jet d'eau et/ou lors d'une phase ultérieure d'usinage dans laquelle les pièces sont usinées en fonction des formes et dimensions finales requises.

La figure 5 illustre les secteurs usinés 8 obtenus lors de l'étape d'usinage des secteurs 6. A cette étape, chacun des secteurs 6 est usiné de façon à enlever les zones de matière inutiles pour les opérations suivantes et/ou pour ajouter des motifs ou détails additionnels utiles pour le moulage des pneumatiques.

La figure 6 montre une étape préalable consistant à réaliser une matrice de base 7 ou gabarit de préférence à l'aide de résine. Cette étape est réalisée de façon connue en soit, et sert à constituer une pièce de forme inverse à celle d'un des secteurs 6.

## Revendications

1. Procédé de fabrication d'éléments moulants pour moules destinés au moulage de pneumatiques pourvus d'une bande de roulement comportant un agencement circonférentiel de motifs de sculpture, le procédé comportant :
a) une étape consistant à aligner une pluralité de garnitures de base (1) en matériau souple pour former une portion de base de circonférence de bande de roulement (2) chacune des garnitures de base (1) correspondant à un motif de l'agencement circonférentiel de la bande de roulement du pneumatique à mouler ;
b) une étape consistant à générer, à partir de la portion de base de circonférence de bande de roulement (2), un support intermédiaire (3), correspondant à la portion de circonférence de bande de roulement ;
c) une étape d'obtention d'un élément moulant brut (5) à partir du support intermédiaire ;
**caractérisé en ce qu'**il comporte par ailleurs une étape consistant à découper l'élément brut (5) pour former une pluralité d'éléments découpés (6), les éléments découpés étant aptes à être assemblés selon un ordre prédéterminé pour former une portion de moule.

2. Procédé de fabrication selon la revendication 1, **caractérisé en ce que** le support intermédiaire (3) est réalisé dans un moule intermédiaire (4).

3. Procédé de fabrication selon la revendication 2, **caractérisé en ce que** les garnitures de base (1) s'étendent les unes à la suite des autres dans le moule intermédiaire (4).

4. Procédé de fabrication selon l'une des revendications 2 ou 3, **caractérisé en ce que** les garnitures de base (1) dans le moule intermédiaire (4) sont calées à l'aide d'une cale, cette cale présentant une dureté différente du matériau souple.

5. Procédé de fabrication selon l'une des revendications précédentes, les éléments découpés comportant au moins une surépaisseur de matière, **caractérisé en ce que** les éléments découpés sont usinés pour mise en forme finale des dimensions avant assemblage dans le moule.

6. Procédé de fabrication selon l'une des revendications précédentes, **caractérisé en ce que** le support intermédiaire (3) est réalisé en matériau destructible.

7. Procédé de fabrication selon l'une des revendications précédentes, **caractérisé en ce que** l'élément moulant brut 5 est réalisé en matériau réutilisable.

8. Procédé selon l'une des revendications précédentes, comportant une étape préalable de réalisation d'une matrice de base (7) en résine permettant l'obtention de garnitures de base correspondantes.

9. Procédé de fabrication selon l'une des revendications précédentes, **caractérisé en ce que** la garniture de base (1) est constituée de silicone, et de préférence de silastène.

10. Procédé de fabrication selon l'une des revendications précédentes, **caractérisé en ce que** l'étape (a) d'alignement des garnitures de base (1) est effectuée sur un support plat ou concave.

11. Moule comportant un support sur lequel une pluralité d'éléments moulants (8) obtenus par le procédé selon l'une des revendications 1 à 10 sont alignées circonférentiellement.

## Patentansprüche

1. Verfahren zur Herstellung von Formelementen für Formen, die zur Formung von Reifen bestimmt sind, die mit einem Laufstreifen versehen sind, der eine Anordnung von Skulpturmotiven in Umfangsrichtung umfasst, das Verfahren umfassend:
a) einen Schritt, der darin besteht, eine Mehrzahl von Grundgarnituren (1) aus weichem Material auszurichten, um einen Grundabschnitt eines Umfangs eines Laufstreifens (2) zu bilden, wobei die Grundgarnituren (1) jeweils einem Motiv der Anordnung in Umfangsrichtung des Laufstreifens des zu formenden Reifens entsprechen;
b) einen Schritt, der darin besteht, anhand des Grundabschnitts eines Umfangs eines Laufstreifens (2) einen Zwischenträger (3) zu erzeugen, der dem Abschnitt eines Umfangs eines Laufstreifens entspricht;
c) einen Schritt des Erhaltens eines Rohformelements (5) anhand des Zwischenträgers;
**dadurch gekennzeichnet, dass** es außerdem einen Schritt umfasst, der darin besteht, das Rohelement (5) zuzuschneiden, um eine Mehrzahl von zugeschnittenen Elementen (6) zu bilden, wobei die zugeschnittenen Elemente geeignet sind, in einer vorbestimmten Reihenfolge zusammengesetzt zu werden, um einen Formabschnitt zu bilden.

2. Verfahren zur Herstellung nach Anspruch 1, **dadurch gekennzeichnet, dass** der Zwischenträger (3) in einer Zwischenform (4) ausgebildet ist.

3. Verfahren zur Herstellung nach Anspruch 2, **dadurch gekennzeichnet, dass** sich die Grundgarnituren (1) eine nach der anderen in der Zwischenform (4) erstrecken.

4. Verfahren zur Herstellung nach einem der Ansprüche 2 oder 3, **dadurch gekennzeichnet, dass** die Grundgarnituren (1) in der Zwischenform (4) mithilfe eines Keils verkeilt sind, wobei dieser Keil eine Härte aufweist, die sich von dem weichen Material unterscheidet.

5. Verfahren zur Herstellung nach einem der vorhergehenden Ansprüche, wobei die zugeschnittenen Elemente mindestens eine Material-Überdicke aufweisen, **dadurch gekennzeichnet, dass** die zugeschnittenen Elemente für die endgültige Formgebung der Abmessungen vor dem Zusammensetzen in der Form bearbeitet werden.

6. Verfahren zur Herstellung nach einem der vorhergehenden Ansprüche, **dadurch gekennzeichnet, dass** der Zwischenträger (3) aus zerstörbarem Material ausgebildet ist.

7. Verfahren zur Herstellung nach einem der vorhergehenden Ansprüche, **dadurch gekennzeichnet, dass** das Rohformelement (5) aus wiederverwendbarem Material ausgebildet ist.

8. Verfahren nach einem der vorhergehenden Ansprüche, umfassend einen vorhergehenden Schritt des Bildens einer Grundmatrize (7) aus Harz, die das Erhalten entsprechender Grundgarnituren erlaubt.

9. Verfahren zur Herstellung nach einem der vorhergehenden Ansprüche, **dadurch gekennzeichnet, dass** die Grundgarnitur (1) aus Silikon und vorzugsweise aus Silastene gebildet ist.

10. Verfahren zur Herstellung nach einem der vorhergehenden Ansprüche, **dadurch gekennzeichnet, dass** der Schritt (a) des Ausrichtens der Grundgarnituren (1) auf einer ebenen oder konkaven Unterlage durchgeführt wird.

11. Form, umfassend einen Träger, auf dem eine Mehrzahl von Formelementen (8), die durch das Verfahren nach einem der Ansprüche 1 bis 10 erhalten wurden, in Umfangsrichtung ausgerichtet sind.

## Claims

1. Method for manufacturing moulding elements for moulds intended for moulding tyres provided with a tread comprising a circumferential arrangement of tread pattern elements, the method comprising:
a) a step consisting in aligning a plurality of basic linings (1) made of flexible material so as to form a basic tread circumference portion (2) each of the basic linings (1) corresponding to a pattern element of the circumferential arrangement of the tread of the tyre that is to be moulded;
b) a step consisting in generating, from the basic tread circumference portion (2), an intermediate support (3) corresponding to the tread circumference portion;
c) a step of obtaining an unfinished moulding element (5) from the intermediate support;
**characterized in that** it moreover comprises a step consisting in cutting the unfinished element (5) to form a plurality of cut elements (6), the cut elements being able to be assembled in a predetermined order to form a mould portion.

2. Method of manufacture according to Claim 1, **characterized in that** the intermediate support (3) is made in an intermediate mould (4).

3. Method of manufacture according to Claim 2, **characterized in that** the basic linings (1) extend one another in the intermediate mould (4).

4. Method of manufacture according to one of Claims 2 or 3, **characterized in that** the basic linings (1) in the intermediate mould (4) are wedged in position using a wedge, this wedge having a different hardness from the soft material.

5. Method of manufacture according to one of the preceding claims, the cut elements comprising an additional thickness of material, **characterized in that** the cut elements are machined for finalizing the dimensions prior to assembly in the mould.

6. Method of manufacture according to one of the preceding claims, **characterized in that** the intermediate support (3) is made of a destructible material.

7. Method of manufacture according to one of the preceding claims, **characterized in that** the unfinished moulding element (5) is made of a reusable material.

8. Method according to one of the preceding claims, comprising a prior step of producing a basic die (7) from resin, making it possible to obtain corresponding basic linings.

9. Method of manufacture according to one of the preceding claims, **characterized in that** the basic lining (1) is made of silicone, and preferably of silastene.

10. Method of manufacture according to one of the preceding claims, **characterized in that** step (a) of aligning the basic linings (1) is performed on a flat or concave support.

11. Mould comprising a support on which a plurality of moulding elements (8) obtained using the method according to one of Claims 1 to 10 are circumferentially aligned.
